# EUROPÄISCHE PATENTSCHRIFT

(11) **EP 1 001 145 B1**
(45) Veröffentlichungstag und Bekanntmachung des Hinweises auf die Patenterteilung: **29.09.2004**
(21) Anmeldenummer: 99121848.8
(22) Anmeldetag: 04.11.1999
(51) Int. Cl.: F02B 3/06, F02B 31/08

(54) **Verfahren zur Optimierung der Gemischbildung eines schnellaufenden direkteinspritzenden Dieselmotors sowie ein nach diesem Verfahren betriebener Dieselmotor**
Method for optimizing mixture forming in a direct injection Diesel engine and a method for operating such an engine
Procédé pour l'optimalisation de formation d'un mélange dans un moteur Diesel à injection directe et un procédé d'opération pour ce moteur

(30) Priorität: 10.11.1998 DE 19851647
(43) Veröffentlichungstag der Anmeldung: 17.05.2000
(73) Patentinhaber: ADAM OPEL AG, 65423 Rüsselsheim (DE)
(72) Erfinder: Braun, Axel, Dipl.-Ing., 66679 Losheim/Bachem (DE)
(74) Vertreter: Daniel, Ulrich W.P.

(56) Entgegenhaltungen:
- EP-A- 0 214 251
- EP-A- 0 875 672
- US-A- 5 553 580
- US-A- 5 640 941

## Beschreibung

Die Erfindung betrifft ein Verfahren gemäß dem Oberbegriff des Patentanspruches 1 sowie einen Dieselmotor gemäß dem Oberbegriff des Patentanspruches 3.

Mit DE 23 00 180 A1 ist ein Verfahren zur Verbesserung der Gemischbildung im Zylinder eines direkteinspritzenden Dieselmotors beschrieben, bei dem der Luftstrom vor Eintritt in den Zylinder mindestens teilweise dadurch in Turbulenz versetzt wird, daß er in zwei oder mehr Teilströme aufgeteilt wird und daß diese Teilströme im Winkel zueinander wieder zu einem Strom zusammengeführt werden.
Mit einer solchen Maßnahme kann zwar die Zylinderladung insgesamt gut durchmischt werden, so daß insbesondere Bereiche mit relativem Luftüberschuß und damit die Bildung größerer Mengen von NOx vermieden werden können. Eine Berücksichtigung von veränderlichen äußeren Faktoren oder motorischen Parametern auf das Brennverhalten der Zylinderladung ist damit aber nicht möglich.

EP 0 214 251 B1 beschreibt einen direkteinspritzenden Dieselmotor mit zwei Einlaß- und Auslaßventilen je Zylinder, wobei den Einlaßventilen jeweils ein Einlaßkanal zugeordnet ist, von denen einer als Drallkanal und der andere als Füllungskanal ausgebildet ist. Im Füllungskanal ist ein verstellbares Strömungsleitorgan angeordnet, welches in Abhängigkeit von Motorparametern so einstellbar ist, daß es im Teillastbereich geschlossen und im Vollastbereich geöffnet ist, wobei ein Teilquerschnitt des Füllungskanals offen bleibt, so daß die Luftströmung so beeinflußt wird, daß im Zylinder eine Verminderung der drallmindernden Ladeluftmenge und eine Erhöhung der den Drall und die Verwirbelung verstärkenden Ladeluft verursacht wird.
Somit kann in Abhängigkeit von Motorparametern wie Ladedruck, Motordrehzahl oder Einspritzmenge der Drall der Zylinderladung beeinflußt werden.
Eine Beeinflussung der Zylinderladung und damit des Brennverhaltens der Ladung von äußeren Faktoren ist damit nicht vorgesehen. So ist z. B. zu beobachten, daß bei sonst optimal eingestellter Brennkraftmaschine infolge einer Veränderung des äußeren Luftdruckes, insbesondere der Absenkung des Luftdruckes z.B. durch Betreiben des Motors in größerer Höhe, wie dies bei Kraftfahrzeugen an Bergstrecken auftritt, eine erhöhte Schwarzrauchbildung eintritt.

Der Erfindung liegt die Aufgabe zugrunde, ein Verfahren zur Verbesserung der Gemischbildung bei schnellaufenden direkteinspritzenden Dieselmotoren anzugeben, durch welches insbesondere der nachteilige Einfluß von sich veränderndem äußeren Luftdruck auf die motorische Verbrennung bei einem gattungsgemäßen Dieselmotor vermeidbar ist.

Die Erfindung löst diese Aufgabe mit den Merkmalen des Anspruches 1. Anspruch 2 ist Gegenstand einer vorteilhaften Weiterbildung des Verfahrens nach Anspruch 1.

Der Erfindung liegt weiterhin die Aufgabe zugrunde, einen gattungsgemäßen Dieselmotor dahingehend zu verbessern, daß er bei sich verändernden Luftdrücken mit stark reduzierter Schwarzrauchbildung reagiert. Diese weitere Aufgabe wird gelöst durch die Merkmale des Anspruches 3.

Bei einem mit mindestens zwei Einlaßkanälen versehenem direkteinspritzenden Dieselmotor, bei dem zumindest ein Drallkanal und ein Füllungskanal vorgesehen sind, wobei der Füllungskanal mit einer Drosselklappe versehen ist, wird über das Motorsteuersystem diese Drosselklappe in Abhängigkeit von der Luftdichte oder einer die Luftdichte im Zylinder repräsentierenden Ersatzgröße, wie beispielsweise der Umgebungsluftdruck, der Ladedruck, die Lufttemperatur oder der Frischluftmassenstrom jeweils in Abhängigkeit von Motordrehzahl und Last so gesteuert, daß mit abnehmender Luftdichte D der Ladungsdrall cᵤ/cₐ zunimmt.
Durch den erhöhten Einlaßdrall bei absinkender Luftdichte wird die Luftausnutzung bei der Verbrennung verbessert. Bei gleicher Kraftstoff-Einspritzmasse wird damit eine Verringerung der Partikel im Abgas bzw. eine Reduzierung des Schwarzrauches erreicht. Der innermotorische Wirkungsgrad wird verbessert. Im Ergebnis ergeben sich günstigere Emmissionswerte und niedrigerer Kraftstoffverbrauch.
Bei einem definierten gleichbleibenden Schwarzrauchniveau wird durch ein Anheben des Ladungsdralls cᵤ/cₐ bei Absinken der Luftdichte, z. B. in Höhenlagen, die maximal mögliche Einspritzmasse und damit das Drehmoment erhöht. Dies verbessert deutlich die Anfahrbarkeit sowie das gesamte Fahrverhalten eines mit einem erfindungsgemäßen Dieselmotor angetriebenen Kraftfahrzeuges in Höhenlagen.

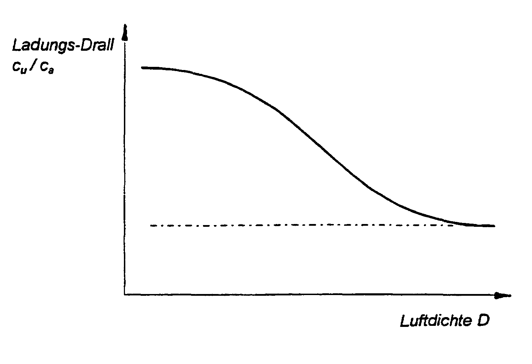

Die Erfindung wird im folgenden unter Bezugnahme auf die Zeichnung näher erläutert. Die Zeichnung zeigt in einem Diagramm die Abhängigkeit des einzuregelnden Ladungsdralles cᵤ/cₐ von der Luftdichte D. Der Ladungsdrall ist dabei in üblicher Weise definiert durch das Verhältnis der Umfangsgeschwindigkeit cᵤ zur Axialgeschwindigkeit cₐ der Luft im Zylinder.
Aus dem Diagramm geht hervor, daß bei geringer Luftdichte D, z. B. bei Betrieb des Dieselmotors in einer Umgebung mit geringem Luftdruck, ein hoher Ladungsdrall cᵤ/cₐ einzuregeln ist. Dazu kann in an sich bekannter Weise der Luftdruck gemessen und mit einer in der Motorsteuerung gespeicherten Tabelle verglichen werden, in welcher der äußere Luftdruck in Verbindung mit der Drehzahl und dem Lastzustand des Motors auf eine Luftdichte D im Zylinder verweist. Bei Erkennen einer ausreichend geringen Luftdichte D im Zylinder wird vom Motorsteuergerät der Durchgang durch den Füllungskanal zunehmend gedrosselt, so daß die Zylinderladung zunehmend durch den Drallkanal angesaugt wird. Damit erhöht sich der Ladungsdrall cᵤ/cₐ in gewünschter Weise und der Motor kann trotz geringer Luftdichte D mit einem sehr geringen Schwarzrauchanteil im Abgas und mit verbessertem Wirkungsgrad betrieben werden.

## Patentansprüche

1. Verfahren zur Optimierung der Gemischbildung eines schnellaufenden direkteinspritzenden Dieselmotors mit mehreren Einlaßkanälen und mindestens einem Auslaßkanal pro Zylinder und mit Ventilen zum Öffnen und Schließen der Kanäle, wobei zumindest ein Einlaßkanal als Drallkanal und mindestens ein weiterer Einlaßkanal als Füllungskanal ausgebildet sind und der bzw. die Füllungskanäle mittels Drosselelementen in ihrem Querschnitt von einem Motorsteuergerät veränderbar sind, so daß bei deren Drosselung ein grösserer Anteil der Ladung durch den bzw. die Drallkanäle in den Zylinder gelangt und so den Ladungsdrall cᵤ/cₐ erhöht, **dadurch gekennzeichnet, daß** die besagten Drosselelement desweiteren derart gesteuert werden, daβ bei abnehmender Luftdichte D im Zylinder der Ladungsdrall cᵤ/cₐ im Zylinder zunimmt und bei zunehmender Luftdichte D der Ladungsdrall cᵤ/cₐ abnimmt.

2. Verfahren nach Anspruch 1, **dadurch gekennzeichnet, daß** der Ladungsdrall cᵤ/cₐ in Abhängigkeit von der zunehmenden Luftdichte D auf einen Wert von ca. 15 % des maximalen Ladungsdralles cᵤ/cₐ reduziert wird und dann bei weiter steigender Luftdichte D annähernd konstant bleibt.

3. Schnellaufender direkteinspritzender Dieselmotor mit optimierter Gemischbildung mit mehreren Einlaßkanälen und mindestens einem Auslaßkanal pro Zylinder und mit Ventilen zum Öffnen und Schließen der Kanäle, wobei zumindest ein Einlaßkanal als Drallkanal und mindestens ein weiterer Einlaßkanal als Füllungskanal ausgebildet sind und der bzw. die Füllungskanäle mittels Drosselelementen in ihrem Querschnitt von einem Motorsteuergerät veränderbar sind, so daß bei deren Drosselung ein größerer Anteil der Ladung durch den bzw. die Drallkanäle in den Zylinder gelangt und so den Ladungsdrall cᵤ/cₐ erhöht, **dadurch gekennzeichnet, daß** der bzw. die Füllungskanäle mit abnehmender Luftdichte D zunehmend gedrosselt sind, so daß der durch den bzw. die Drallkanäle einströmende Anteil der Ladung zunimmt, hingegen der Anteil des durch den bzw. die Füllungskanäle einströmenden Ladungsanteils abnimmt und so der Ladungsdrall cᵤ/cₐ im Zylinder von einem Maximalwert bei niedriger Luftdichte D mit zunehmender Luftdichte D auf einen vorgegebenen Minimalwert zurückgeht.

## Claims

1. Method for optimising the mixture formation of a highspeed, direct-injection diesel engine with several inlet ports and at least one exhaust port per cylinder and with valves for opening and closing the ports, wherein at least one inlet port is designed as a swirl port and at least one further inlet port is designed as a filling port, and the filling port or ports are variable in cross-section by an engine control device by means of throttle elements, so that when they are throttled a larger proportion of the charge passes through the swirl port or ports into the cylinder and so increases the swirl of the charge cᵤ/cₐ, **characterised in that** the said throttle elements are further controlled in such a way that, with decreasing air density D in the cylinder, the swirl of the charge cᵤ/cₐ in the cylinder increases, and with increasing air density D, the swirl of the charge cᵤ/cₐ decreases.

2. Method according to claim 1, **characterised in that** the swirl of the charge cᵤ/cₐ is reduced to a value of about 15% of the maximum swirl of the charge cᵤ/cₐ as a function of the increasing air density D, and then remains approximately constant with further increasing air density D.

3. High-speed, direct-injection diesel engine with optimised mixture formation with several inlet ports and at least one exhaust port per cylinder and with valves for opening and closing the ports, wherein at least one inlet port is designed as a swirl port and at least one further inlet port is designed as a filling port, and the filling port or ports are variable in cross-section by an engine control device by means of throttle elements, so that when they are throttled a larger proportion of the charge passes through the swirl port or ports into the cylinder and so increases the swirl of the charge cᵤ/cₐ, **characterised in that** the filling port or ports are throttled increasingly with decreasing air density D, so that the proportion of the charge entering the swirl port or ports increases, while the proportion of the charge entering the filling port or ports decreases, and so the swirl of the charge cᵤ/cₐ in the cylinder reverts from a maximum value at low air density D to a predetermined minimum value with increasing air density D.

## Revendications

1. Procédé pour optimiser la formation du mélange d'un moteur Diesel à injection directe et à vitesse de rotation élevée avec plusieurs canaux d'admission et au moins un canal d'échappement par cylindres et avec des soupapes pour ouvrir et fermer les canaux, dans lequel procédé au moins un canal d'admission est réalisé comme un canal de tourbillonnement et un autre canal d'admission est réalisé comme un canal de remplissage et le ou les canaux de remplissage sont susceptibles d'avoir leur section transversale modifiée par des éléments d'étranglement d'un organe de commande de moteur, de sorte que par l'étranglement de ces éléments une plus grande partie de l'alimentation en air parvienne dans le cylindre par le ou les canaux de tourbillonnement et augmente ainsi le tourbillonnement cᵤ/cₐ de l'alimentation en air, **caractérisé en ce que** lesdits éléments d'étranglement, sont en outre commandés de telle sorte que pour une densité D de l'air décroissante dans le cylindre, le tourbillonnement cᵤ/cₐ de l'alimentation en air dans le cylindre augmente et que pour une densité D croissante de l'air, le tourbillonnement cᵤ/cₐ de l'alimentation en air diminue.

2. Procédé selon la revendication 1, **caractérisé en ce que** le tourbillonnement cᵤ/cₐ de l'alimentation en air en fonction de la densité de l'air D croissante est réduit à une valeur d'environ 15 % du tourbillonnement maximal cᵤ/cₐ de l'alimentation en air et pour une densité de l'air d'admission D qui continue à croître reste approximativement constant.

3. Moteur Diesel à injection directe, à vitesse de rotation élevée et à formation de mélange optimisée avec plusieurs canaux d'admission et au moins un canal d'échappement par cylindre et avec des soupapes pour ouvrir et fermer des canaux, dans lequel moteur au moins un canal d'admission est réalisé comme un canal de tourbillonnement et un autre canal d'admission est réalisé comme un canal de remplissage et le ou les canaux de remplissage sont susceptibles d'avoir leur section transversale modifiée par des éléments d'étranglement d'un organe de commande de moteur, de sorte que par l'étranglement de ces éléments une plus grande partie de l'alimentation en air parvienne dans les cylindres par le ou les canaux de tourbillonnement et augmente ainsi le tourbillonnement de l'alimentation en air, **caractérisé en ce que** le ou les canaux de remplissage, pour une densité de l'air d'admission D décroissante, sont étranglés de façon croissante, de sorte que la proportion de l'alimentation en air s'écoulant à travers le ou les canaux de tourbillonnement augmente, tandis qu'au contraire la proportion de la partie d'alimentation en air s'écoulant à travers le ou les canaux de remplissage diminue et qu'ainsi le tourbillonnement cᵤ/cₐ de l'alimentation en air dans le cylindre diminue depuis une valeur maximale pour une densité de l'air d'alimentation D faible jusqu'à une valeur minimale prédéterminée pour une densité D de l'air d'alimentation croissante.
